# EUROPEAN PATENT SPECIFICATION

(11) **EP 3 121 831 B1**
(45) Date of publication and mention of the grant of the patent: **13.09.2017**
(21) Application number: 15178135.8
(22) Date of filing: 23.07.2015
(51) Int. Cl.: H01H 31/00, H02B 13/075, H02B 13/035

(54) **ELECTRIC EARTHING SWITCH ARRANGEMENT FOR GAS INSULATED SUBSTATION**
ELEKTRISCHE ERDUNGSSCHALTERANORDNUNG FÜR GASISOLIERTE UNTERSTATION
AGENCEMENT DE COMMUTATEUR DE MISE À LA TERRE ÉLECTRIQUE DE SOUS-STATION ISOLÉE PAR GAZ

(43) Date of publication of application: 25.01.2017
(73) Proprietor: General Electric Technology GmbH, 5400 Baden (CH)
(72) Inventor: SIKORSKI, Thomas, 4056 BASEL (CH); TREIER, Lukas, 5043 HOLZIKEN (CH)
(74) Representative: Cleary, Fidelma

(56) References cited:
- EP-A2- 0 054 726
- GB-A- 1 544 333
- US-A1- 2009 120 909

## Description

### TECHNICAL FILED

The invention relates to an electric earthing switch to be mounted in a gas insulated substation to electrically connect electric lines of this substation to the earth.

### STATE OF PRIOR ART

In a gas insulated substation, an electric line to be connected to the earth comprises typically one or three bus bars which are mounted in a leak-proof casing filled with dielectric gas such as SF6.

Connecting such lines to the earth requires installation of a particular earthing switch on this line. This switch comprises an actuating mechanism to allow connection and disconnection of the bus bars which are in the enclosure of the casing, to an earth connector of the substation which is out of this enclosure since it is not insulated with dielectric gas.

In the known design of earthing switches, such as for example in patent documents WO2007042548 or WO2006131560, the switch comprises a particular casing or housing which is mounted on the line to surround its bus bars. This casing or housing of the switch is then necessarily a part of the main casing of the line allowing proper alignment of the components of the switch with the bus bars.

Since the line contacts of the switch are in the enclosure insulated with dielectric gas, and since the earth connector of the substation is not insulated with gas, the switch comprises additional electrically insulating means which carry contacts and/or moving parts rendering its design complex.

It results from the foregoing that the installation of such an earthing switch into a gas insulated substation requires its integration in the design of the compartment enclosing the bus bars of the line.

Accordingly, it is very expensive to integrate such a switch since it requires additional design studies to decide at which location it can be located on the line, based on the free space available in the neighborhood of the lines, and how the compartment of these lines has to be modified. It is also very expensive when such an earthing switch has to be added to an existing gas insulated substation, since it requires significant modifications of the corresponding lines.

The goal of the invention is to provide an electric earthing switch which is compact and easy to mount to allow a modular design of a gas insulated substation.

### PRESENTATION OF THE INVENTION

The invention relates to an electric earthing switch for a gas insulated substation, to connect at least one line conductor of the substation to the earth, this switch comprising:
- a metallic housing delimiting an inner compartment and an outer compartment and comprising a flange delimiting a single main opening of this housing which communicates with the inner compartment;
- an insulating plate to be located and tightened between the flange of the housing and a flange of a compartment of the substation enclosing each line conductor;
- at least one line contact carried by the insulating plate and having an insert portion with a thread bolt passing through the insulating plate to be electrically connected to a line conductor;
- at least one fixed earth contact passing through the wall of the housing and secured to this housing, this fixed earth contact having an outer portion out of the housing and an inner portion located in the housing ;
- at least one sliding earth contact carried by the inner portion of a fixed earth contact and sliding relatively to this fixed earth contact, each sliding earth contact being electrically connected to this fixed earth contact;
- an actuating mechanism to move every sliding earth contact between an open position at a distance from the line contact and a closed position in electric contact with the line contact;
- wherein each fixed earth contact extends perpendicular to the sliding direction of the sliding earth contacts;
- and wherein the sliding contacts and the actuating mechanism are enclosed in the inner compartment, the outer compartment being dedicated to a drive actuator to be connected to the actuating mechanism.

Thanks to the arrangement of the fixed earth contact perpendicular to the sliding earth contacts and the line contacts carried by the insulating plate, the actuating mechanism is very compact, with a diameter not wider than the outer diameter of the flange, and a height corresponding mainly to the height of the sliding contacts increased with the length of their moving path.

The invention also relates to an electric earthing switch as defined above, comprising a plurality of sliding earth contacts and a plurality of fixed earth contacts, an insulating beam to rigidly secure the sliding earth contacts to each other, the actuating mechanism moving the insulating beam to move the sliding earth contacts together upon actuation.

The invention also relates to an electric earthing switch as defined above, wherein each line contact comprises a tulip line contact, and wherein each sliding earth contact comprises a pin which is inserted in the corresponding tulip line contact when the earthing switch is in closed position.

The invention also relates to an electric earthing switch as defined above, wherein each sliding earth contact is carried by a corresponding fixed earth contact by means of an intermediate electrically insulating sleeve, and wherein each fixed earth contact carries a tulip through which the sliding contact passes to ensure electric connection between the sliding earth contact and the fixed earth contact.

The invention also relates to an electric earthing switch as defined above, comprising an electric connecting part securing the outer portions of the earth contacts together out of the housing.

### BRIEF DESCRIPTION OF THE DRAWINGS

- figure 1 is a perspective view of the electric earthing switch according to the invention in the closed position showing the insulating plate carrying the line contacts and the earth contacts with the actuation mechanism;
- figure 2 is a front view of the electric earthing switch according to the invention in the closed position showing the insulating plate carrying the line contacts and the earth contacts with the actuation mechanism;
- figure 3 is a front view of the electric earthing switch according to the invention in the open position showing the insulating plate carrying the line contacts and the earth contacts with the actuation mechanism;
- figure 4 is a perspective view of the housing of the electric earthing switch according to the invention;
- figure 5 is a sectional view of the housing of the electric earthing switch according to the invention with its internal components.

### DETAILED PRESENTATION OF PARTICULAR EMBODIMENTS

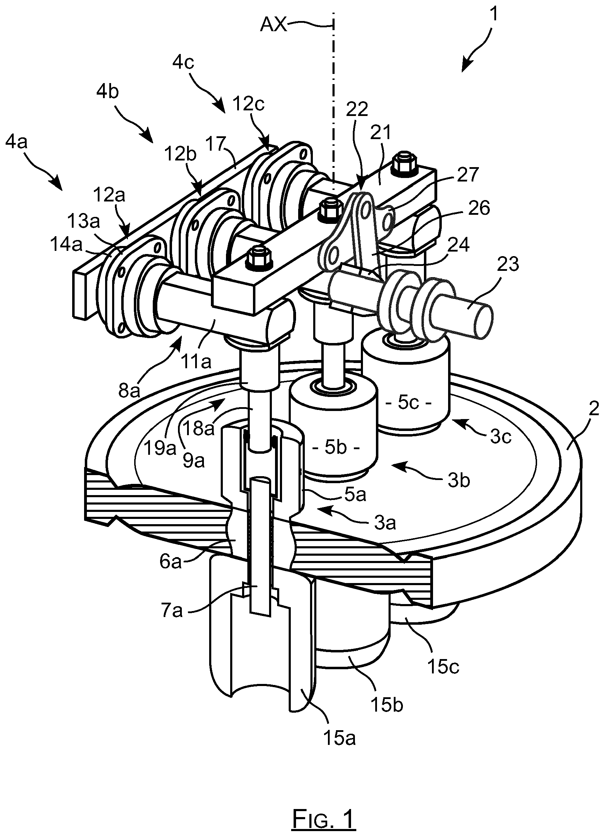

The electric earthing switch 1 according to the invention seen in figure 1 comprises a main insulating plate 2 which is generally circular, and which carries three line contacts 3a, 3b, 3c. The example of the figures is a three phase electric earthing switch, but the invention applies also to a single phase or other kinds of multiple phase earthing switch.

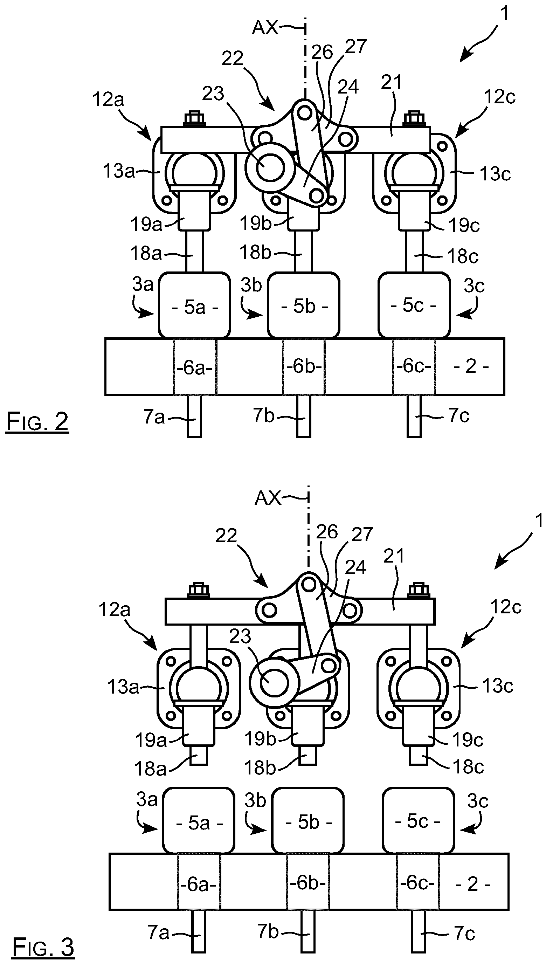

This earthing switch 1 comprises three corresponding earth contacts 4a, 4b, 4c which can be in contact with the corresponding line contacts 3a, 3b, 3c when the switch is closed as in figures 1 and 2, or disconnected from these line contacts when the switch is open as in figure 3.

In the following, the first line contact 3a and the first earth contact 4a are described in more details with their components and parts having each a reference sign comprising letter "a" as suffix. Since the second and third contacts have the same parts as components, the corresponding parts for the second line contact 3b and second earth contact 4b are implicitly designated by the same reference sign having letter "b" as suffix instead of "a". The corresponding parts for the third line contact 3c and third earth contact 4c are implicitly designated with the same reference sign having letter "c" as suffix instead of "a".

The first line contact 3a comprises a tulip contact 5a and an insert portion 6a with a thread bolt 7a which passes through the insulating plate 2 to be electrically connected to a corresponding line conductor of the gas insulated substation to which the earthing switch is to be installed. The tulip 5a with its shielding part is fixed to the corresponding insert portion 6a by means of a standard thread bolt 7a. The line contacts 3a, 3b, 3c extend each according to a direction AX which is perpendicular to the insulating plate 2.

The earth contact 4a is made of a fixed earth contact generally designated by 8a, and a sliding earth contact generally designated by 9a.

The fixed earth contact 8a comprises a main conductive arm 11a carried by a support 12a comprising a fixation plate 13a and an insulating part 14a passing through this insulation plate. The conductive arm 11a passes through the insulating part 14a, and thus passes through the fixation plate 13a. The arm 11a with the support 12a comprising the fixation plate 13a and the insulating part 14a are all rigidly secured to each other, forming a same single element.

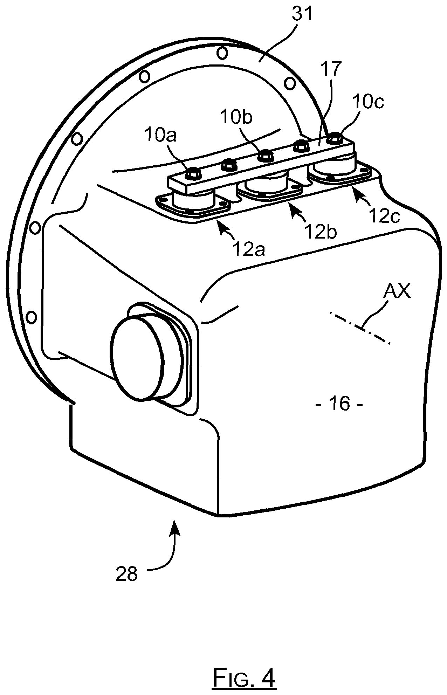

When the fixed earth contact 8a is mounted, as visible in figure 4, the arm 11a passes through holes of the wall of the housing 16 of the switch, the fixation plate 13a being at the outer face of this wall and secured to it by screws or the like.

The fixed earth contact 8a comprises an outer portion corresponding to the outer extremity of the arm 11a and the support 12a, and an inner portion corresponding to the main part of the arm 11a with its inner extremity.

As visible in figure 1 and 4, the three outer extremities of the three arms 11a, 11b and 11c are electrically connected by an earthing plate 17 secured to these arms by bolts 10a, 10b and 10c or the like, this earthing plate 17 being electrically connected to the earth.

The three main arms 11a, 11b and 11c extend parallel to each other and parallel to the insulating plate, i.e. perpendicularly to the direction AX of the line tulip contacts 3a, 3b and 3c.

The inner extremity of the arm 11a of the fixed earth contact 8a, which is its free end, carries the corresponding earth sliding contact 9a which extends parallel to the AX direction, i.e. perpendicular to this arm.

This sliding contact 9a comprises a main pin 18a passing through a corresponding opening in the extremity of the arm 11a to slide into it. An electrically insulating sleeve, which is not visible in the figures, is mounted in this opening of the arm 11a, the pin 18a sliding into this insulating sleeve to ensure that electric current cannot weld the pin 18a to the arm 11a.

Additionally, a tulip contact 19a rigidly secured to the arm 11a and surrounding the pin 18a provides electric connection between the pin 18a and the arm 11a for any position of the sliding contact 9a.

The pin 18a has a contacting end which faces the tulip contact 3a in the open position as in figure 3, and which has an appropriate shape to be inserted into this tulip contact when the switch is closed as in figures 1 and 2.

The three pins 18a, 18b and 18c which are parallel to the direction AX have each their end which is opposite to their contacting end, which passes through a same insulating beam 21 which is perpendicular to the pins 18a, 18b, 18c and perpendicular to the arms 11a, 11b, 11c.

The pins 18a, 18b, 18c are rigidly secured to the insulating beam 21 by bolts in order to form together a same mechanical element which can be actuated to slide parallel to direction AX between the open position and the closed position.

The actuating mechanism which is generally marked as 22 comprises a main shaft 23 extending parallel to the direction of the main arms 11a, 11b, 11c and which is carried by the housing 16 to be able to be rotated.

This main shaft 23 is connected to the insulated beam 21 by means of a first cam 24 rigidly secured to this shaft 23, and a second cam 26 having an extremity secured to the free end of cam 24 and a second extremity secured to a lug 27 which is rigidly secured to the beam 21.

The first cam 24 and the second cam 26 and also the lug 27 extend both parallel to a plane comprising the three pins 18a, 18b, 18c, and move each into a plane parallel to this plane.

Practically, when the shaft 23 is rotated clockwise in the figures 2 and 3, the beam 21 is moving to get closer to the tulip contacts 5a, 5b, 5c in order to close the switch, as in figure 2. When the shaft 23 is rotated counterclockwise, the beam is moving away from the tulip contacts 5a, 5b, 5c, in order to open the switch, as in figure 3.

In other words, the linkage composed of the first and second cam transforms the rotation of the shaft into a translation of the sliding contacts along direction AX. Since this linkage is connected to the insulating beam 21, the actuation mechanism is insulated from the sliding contacts and from the line contacts.

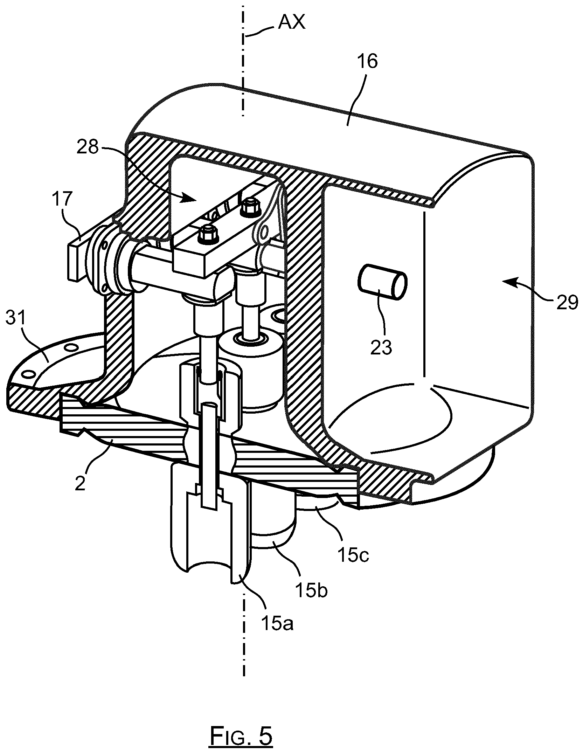

As visible in more details in figures 4 and 5, the actuation mechanism 22 is mounted in an inner compartment 28 of the housing 16 with the other components of the switch, i.e. the inner parts of the fixed earth contacts 8a, 8b and 8c, the sliding contacts 9a, 9b, 9c and the line contacts 5a, 5b, 5c. This inner compartment 28 is separated from the compartment of the line by the insulating plate 2.

This actuation mechanism is driven by a driving mechanism mechanically connected to the shaft 23 to rotate it clockwise or anticlockwise in order to open or close the switch. The drive mechanism is located in an outer compartment 29 of the housing 16, the shaft 23 passing through an internal wall of the housing to protrude into this outer compartment 29 which is contiguous to the inner compartment 28, and which is dedicated to the drive mechanism.

The housing 16 comprises a main circular flange 31 with appropriate holes to be secured to a flange of a compartment enclosing the lines to be earthed, the circular insulating plate 2 being gripped between the flange 31 of the housing and the flange of the compartment.

The flange surrounds the main opening of this housing, i.e. the part or opening which is mounted against the insulating plate 2. Apart from this main opening, the housing comprises mainly several much smaller holes to receive the earth contacts, but not any other opening as great as this flange.

This flange 31 extends perpendicular to the orientation AX of the sliding contacts 9a, 9b, 9c, and it delimits the contour of the main opening of this housing 16. When the system is mounted, the insulating plate 2 is against the flange 31 with the tulip contacts 5a, 5b, 5c into the inner space of the housing approximately surrounded by this flange 31.

In that situation, the sliding contacts extend perpendicular to the flange 31 and the plate 2, facing the corresponding tulip contacts 5a, 5b, 5c, and the fixed earth contacts 8a, 8b, 8c extend parallel to the flange 31, passing through the wall of the housing to protrude out of this housing, as seen in figure 4.

The installation of the electric earthing switch according to the invention can be achieved on any standard flange of a casing enclosing electric lines. It requires to open the said flange, to secure plugin contact parts 15a, 15b, 15c to the bus bars, then to apply the insulating plate 2 and to screw the thread bolts 7a, 7b, 7c in order to secure the plugin contact parts 15a, 15b, 15c to the insert portions 6a, 6b, 6c carried by this insulating plate 2. Depending on the situation, the insulating plate 2 with its threaded bolts 7a, 7b, 7c secured to existing plugin contact parts 15a, 15b, 15c can be already present in the existing compartment.

At this stage, the line contacts 5a, 5b, 5c can be installed by screwing and tightening them to the thread bolts 7a, 7b, 7c. Then, the housing 16 carrying the fixed earth contacts and the sliding earth contacts can be installed with its flange 31 against the insulating plate 2.

Appropriate bolts are then passed through the holes of the flange 31 and corresponding holes of the insulating plate 2, and corresponding holes of the flange of the casing, and these bolts are tightened to secure the flange 31 of housing 16 to the flange of the casing, with the insulating plate gripped between these two flanges.

Then, the earthing plate 17 which is at the outer face of the housing can be electrically connected to a connection to the earth of the gas insulated substation.

With the arrangement of the invention, the earthing switch together with its drive mechanism according to the invention is very compact with a simple design.

The earthing switch comprises the main switch in a first gas insulated compartment with an insulating plate carrying the line contacts and a metallic housing carrying all the other parts and having a flange to be secured to the insulating plate against the corresponding flange of the casing of the line and a drive mechanism in a second compartment outside insulating gas, all said compartments being in the same housing.

As a result, the installation of the earthing switch is very simple, allowing it to be easily adapted onto an existing gas insulated substation comprising a casing with a flange providing access to the lines to be connected. It allows a very modular setup of the components in the gas insulated substation since it can be installed on almost any standard flange of the substation, on every insulating plate, barrier of open type, with standard fixation points.

Since every part of the earthing switch and its drive mechanism is assembled in two different spaces of one housing, the system can be mounted without loosing time in aligning the conductors and contacts. This earthing system is particularly adapted for a make-proof earthing switch.

## Claims

1. Electric earthing switch (1) for a gas insulated substation, to connect at least one line conductor of the substation to the earth, this earthing switch comprising:
- a metallic housing (16) delimiting an inner compartment (28) and an outer compartment (29) and comprising a flange (31) delimiting a single main opening of this housing which communicates with the inner compartment (28);
- an insulating plate (2) to be located and tightened between the flange of the housing and a flange of a compartment of the substation enclosing each line conductor;
- at least one line contact (3a, 3b, 3c) carried by the insulating plate (2) and having an insert portion (6a, 6b, 6c) with a thread bolt (7a, 7b, 7c) passing through the insulating plate (2) to be electrically connected to a line conductor;
- at least one fixed earth contact (8a, 8b, 8c) passing through the wall of the housing (16) and secured to this housing (16), this fixed earth contact having an outer portion out of the housing and an inner portion located in the housing;
- at least one sliding earth contact (9a, 9b, 9c) carried by the inner portion of a fixed earth contact (8a, 8b, 8c) and sliding relatively to this fixed earth contact (8a, 8b, 8c), each sliding earth contact (9a, 9b, 9c) being electrically connected to this fixed earth contact (8a, 8b, 8c);
- an actuating mechanism to move every sliding earth contact (9a, 9b, 9c) between an open position at a distance from the line contact (3a, 3b, 3c) and a closed position in electric contact with the line contact (3a, 3b, 3c);
- each fixed earth contact (8a, 8b, 8c) extending perpendicular to the sliding direction (AX) of the sliding earth contacts (9a, 9b, 9c);
- and wherein the sliding contacts (9a, 9b, 9c) and the actuating mechanism are enclosed in the inner compartment (28), the outer compartment (29) being dedicated to a drive actuator to be connected to the actuating mechanism.

2. Electric earthing switch according to any of the previous claims, comprising a plurality of sliding earth contacts (9a, 9b, 9c) and a plurality of fixed earth contacts (8a, 8b, 8c), an insulating beam (21) to rigidly secure the sliding earth contacts (9a, 9b, 9c) to each other, the actuating mechanism moving the insulating beam to move the sliding earth contacts (9a, 9b, 9c) together upon actuation.

3. Electric earthing switch (1) according to claim 1 or 2, wherein each line contact (3a, 3b, 3c) comprises a tulip line contact (5a, 5b, 5c), and wherein each sliding earth contact (9a, 9b, 9c) comprises a pin (18a, 18b, 18c) which is inserted in the corresponding tulip line contact (5a, 5b, 5c) when the earthing switch is in closed position.

4. Electric earthing switch according to any of the previous claims, wherein each sliding earth contact (9a, 9b, 9c) is carried by a corresponding fixed earth contact (8a, 8b, 8c) by means of an intermediate electrically insulating sleeve, and wherein each fixed earth contact (8a, 8b, 8c) carries a tulip (19a, 19b, 19c) through which the sliding contact (9a, 9b, 9c) passes to ensure electric connection between the sliding earth contact (9a, 9b, 9c) and the fixed earth contact (8a, 8b, 8c).

5. Electric earthing switch according to any of the previous claims, comprising an electric connecting part (17) securing the outer portions of the earth contacts (4a, 4b, 4c) together out of the housing (16).

## Patentansprüche

1. Elektrischer Erdungsschalter (1) für eine gasisolierte Unterstation, zum Verbinden mindestens eines Leitungsleiters der Unterstation mit der Erde, wobei der Erdungsschalter aufweist:
- ein metallisches Gehäuse (16), das ein Innenabteil (28) und ein Außenabteil (29) begrenzt und einen Flansch (31) aufweist, der eine einzelne Hauptöffnung des Gehäuses begrenzt, die mit dem Innenabteil (28) in Verbindung steht;
- eine isolierende Platte (2), die vorgesehen ist, zwischen dem Flansch des Gehäuses und einem Flansch eines Abteils der Unterstation angeordnet zu sein, die jeden Leitungsleiter umschließt;
- mindestens einen Leitungskontakt (3a, 3b, 3c), der von der isolierenden Platte (2) getragenen wird und einen Einsteckabschnitt (6a, 6b, 6c) mit einem Gewindebolzen (7a, 7b, 7c) hat, der durch die isolierende Platte (2) verläuft, um mit einem Leitungsleiter elektrisch verbunden zu sein;
- mindestens einen festen Erdkontakt (8a, 8b, 8c), der durch die Wand des Gehäuses (16) verläuft und an dem Gehäuse (16) befestigt ist, wobei der feste Erdkontakt einen Außenabschnitt außerhalb des Gehäuses und einen Innenabschnitt, der in dem Gehäuse angeordnet ist, aufweist;
- mindestens einen verschiebbaren Erdkontakt (9a, 9b, 9c), der durch den Innenabschnitt eines festen Erdkontaktes (8a, 8b, 8c) getragenen wird und relativ zu dem festen Erdkontakt (8a, 8b, 8c) verschiebbar ist, wobei jeder verschiebbare Erdkontakt (9a, 9b, 9c) mit dem festen Erdkontakt (8a, 8b, 8c) elektrisch verbunden ist;
- einen Betätigungsmechanismus zum Bewegen jedes verschiebbaren Erdkontaktes (9a, 9b, 9c) zwischen einer offenen Position in einem Abstand von dem Leitungskontakt (3a, 3b, 3c) und einer geschlossenen Position in elektrischem Kontakt mit dem Leitungskontakt (3a, 3b, 3c);
- wobei jeder feste Erdkontakt (8a, 8b, 8c) sich senkrecht zu der Schieberichtung (AX) der verschiebbaren Erdkontakte (9a, 9b, 9c) erstreckt;
- und wobei die verschiebbaren Kontakte (9a, 9b, 9c) und der Betätigungsmechanismus in dem Innenabteil (28) umschlossen sind, wobei das Außenabteil (29) einem Antriebsaktuator zugeordnet ist, der mit dem zu Betätigungsmechanismus zu verbinden ist.

2. Elektrischer Erdungsschalter nach einem der vorhergehenden Ansprüche, aufweisend mehrere verschiebbare Erdkontakte (9a, 9b, 9c) und mehrere feste Erdkontakte (8a, 8b, 8c), wobei ein Isolierbalken (21) die verschiebbaren Erdkontakte (9a, 9b, 9c) starr aneinander befestigt, wobei der Betätigungsmechanismus den Isolierbalken bewegt, um die verschiebbaren Erdkontakte (9a, 9b, 9c) bei Betätigung zusammen zu bewegen.

3. Elektrischer Erdungsschalter (1) nach Anspruch 1 oder 2, wobei jeder Leitungskontakt (3a, 3b, 3c) einen Tulpenleitungskontakt (5a, 5b, 5c) aufweist und wobei jeder verschiebbare Erdkontakt (9a, 9b, 9c) einen Stift (18a, 18b, 18c) aufweist, der in den entsprechenden Tulpenleitungskontakt (5a, 5b, 5c) eingesetzt ist, wenn sich der Erdungsschalter in einer geschlossenen Position befindet.

4. Elektrischer Erdungsschalter nach einem der vorhergehenden Ansprüche, wobei jeder verschiebbare Erdkontakt (9a, 9b, 9c) durch einen entsprechenden festen Erdkontakt (8a, 8b, 8c) mittels einer elektrisch isolierenden Zwischenhülse getragen wird und wobei jeder feste Erdkontakt (8a, 8b, 8c) eine Tulpe (19a, 19b, 19c) trägt, durch die der verschiebbare Erdkontakt (9a, 9b, 9c) verläuft, um eine elektrische Verbindung zwischen dem verschiebbaren Erdkontakt (9a, 9b, 9c) und dem festen Erdkontakt (8a, 8b, 8c) zu gewährleisten.

5. Elektrischer Erdungsschalter nach einem der vorhergehenden Ansprüche, aufweisend ein elektrisches Außenteil (17), das die Außenabschnitte der Erdkontakte (4a, 4b, 4c) außerhalb des Gehäuses (16) zusammen befestigt.

## Revendications

1. Commutateur de mise à la terre électrique (1) pour une sous-station isolée au gaz afin de connecter au moins un conducteur de ligne de la sous-station à la terre, ce commutateur de mise à la terre comprenant :
- un boîtier métallique (16) délimitant un compartiment interne (28) et un compartiment externe (29) et comprenant une bride (31) délimitant une ouverture principale unique de ce boîtier qui communique avec le compartiment interne (28) ;
- une plaque isolante (2) à disposer et à serrer entre la bride du boîtier et une bride d'un compartiment de la sous-station enserrant chaque conducteur de ligne ;
- au moins un contact de ligne (3a, 3b, 3c) supporté par la plaque isolante (2) et ayant une partie d'insert (6a, 6b, 6c) avec un boulon fileté (7a, 7b, 7c) passant à travers la plaque isolante (2) pour être connectée électriquement à un conducteur de ligne ;
- au moins un contact de terre fixe (8a, 8b, 8c) passant à travers la paroi du boîtier (16) et fixé à ce boîtier (16), ce contact de terre fixe ayant une partie externe en dehors du boîtier et une partie interne située dans le boîtier ;
- au moins un contact de terre coulissant (9a, 9b, 9c) supporté par la partie interne d'un contact de terre fixe (8a, 8b, 8c) et coulissant par rapport à ce contact de terre fixe (8a, 8b, 8c), chaque contact de terre coulissant (9a, 9b, 9c) étant connecté électriquement à ce contact de terre fixe (8a, 8b, 8c) ;
- un mécanisme d'actionnement pour déplacer chaque contact de terre coulissant (9a, 9b, 9c) entre une position ouverte à une certaine distance du contact de ligne (3a, 3b, 3c) et une position fermée en contact électrique avec le contact de ligne (3a, 3b, 3c) ;
- chaque contact de terre fixe (8a, 8b, 8c) s'étendant perpendiculairement à la direction de coulissement (AX) des contacts de terre coulissants (9a, 9b, 9c) ; et
- dans lequel les contacts coulissants (9a, 9b, 9c) et le mécanisme d'actionnement sont enserrés dans le compartiment interne (28), le compartiment externe (29) étant dédié à un actionneur d'entraînement à connecter au mécanisme d'actionnement.

2. Commutateur de mise à la terre électrique selon l'une quelconque des revendications précédentes, comprenant une pluralité de contacts de terre coulissants (9a, 9b, 9c) et une pluralité de contacts de terre fixes (8a, 8b, 8c), une poutrelle isolante (21) pour fixer de manière rigide les contacts de terre coulissants (9a, 9b, 9c) l'un à l'autre, le mécanisme d'actionnement déplaçant la poutrelle isolante pour déplacer les contacts de terre coulissants (9a, 9b, 9c) conjointement lors d'un actionnement.

3. Commutateur de mise à la terre électrique (1) selon la revendication 1 ou 2, dans lequel chaque contact de ligne (3a, 3b, 3c) comprend un contact de ligne à tulipe (5a, 5b, 5c) et dans lequel chaque contact de terre coulissant (9a, 9b, 9c) comprend une goupille (18a, 18b, 18c) qui est insérée dans le contact de ligne à tulipe correspondant (5a, 5b, 5c) lorsque le commutateur de mise à la terre est en position fermée.

4. Commutateur de mise à la terre électrique selon l'une quelconque des revendications précédentes, dans lequel chaque contact de terre coulissant (9a, 9b, 9c) est supporté par un contact de terre fixe correspondant (8a, 8b, 8c) au moyen d'un manchon intermédiaire isolant de l'électricité et dans lequel chaque contact de terre fixe (8a, 8b, 8c) porte une tulipe (19a, 19b, 19c) à travers laquelle le contact coulissant (9a, 9b, 9c) passe pour assurer une connexion électrique entre le contact de terre coulissant (9a, 9b, 9c) et le contact de terre fixe (8a, 8b, 8c).

5. Commutateur de mise à la terre électrique selon l'une quelconque des revendications précédentes, comprenant une partie de connexion électrique (17) fixant les parties externes des contacts de terre (4a, 4b, 4c) conjointement en dehors du boîtier (16).
